# EUROPÄISCHE PATENTSCHRIFT

(11) **EP 1 163 128 B1**
(45) Veröffentlichungstag und Bekanntmachung des Hinweises auf die Patenterteilung: **05.09.2007**
(21) Anmeldenummer: 00993775.6
(22) Anmeldetag: 05.12.2000
(51) Int. Cl.: B60Q 1/14

(54) **EINRICHTUNG ZUR AUTOMATISCHEN SCHALTUNG VON BELEUCHTUNGSEINRICHTUNGEN BEI FAHRZEUGEN**
DEVICE FOR AUTOMATICALLY SWITCHING LAMPS OF VEHICLES
DISPOSITIF DE MISE EN MARCHE AUTOMATIQUE D'EQUIPEMENTS D'ECLAIRAGE DE VEHICULES

(30) Priorität: 12.01.2000 DE 10000913
(43) Veröffentlichungstag der Anmeldung: 19.12.2001
(73) Patentinhaber: ROBERT BOSCH GMBH, 70442 Stuttgart (DE)
(72) Erfinder: SCHMITT, Patrick, 77839 Lichtenau (DE); HOG, Norbert, 77815 Bühl (DE); HODAPP, Bruno, 77855 Achern-Oensbach (DE); PIENTKA, Rainer, 77871 Renchen (DE); MEIER, Hans, 77833 Ottersweier (DE); BLITZKE, Henry, 77815 Buehl (DE); BURKART, Manfred, 76473 Iffezheim (DE)
(86) Internationale Anmeldenummer: PCT/DE2000/004334
(87) Internationale Veröffentlichungsnummer: WO 2001/051313

(56) Entgegenhaltungen:
- EP-A- 0 753 986
- WO-A-99/50092
- DE-C- 19 818 959
- FR-A- 2 559 282
- US-A- 4 665 321
- US-A- 5 426 589

## Beschreibung

### Stand der Technik

Die Erfindung geht aus von einer Einrichtung zur automatischen Schaltung von Beleuchtungseinrichtungen bei Fahrzeugen nach der Gattung des Anspruchs 1.

Eine solche Einrichtung ist durch die DE 195 23 262 A1 bekannt. Diese Einrichtung weist eine Sensoreinrichtung auf, die die Lichtintensität in der Umgebung des Fahrzeugs erfaßt. Die Sensoreinrichtung weist wenigstens einen Globalsensor auf, der ungerichtet die allgemeine Lichtintensität in der Umgebung des Fahrzeugs erfaßt. Die Sensoreinrichtung weist außerdem einen Richtungssensor auf, durch den gerichtet die Lichtintensität in Fahrtrichtung vor dem Fahrzeug erfaßt wird. Mit der Sensoreinrichtung ist eine Auswerteeinrichtung verbunden, durch die die Signale des Globalsensors und des Richtungssensors der Sensoreinrichtung mit Schwellenwerten verglichen werden, wobei bei Unterschreiten wenigstens eines Schwellenwertes oder beider Schwellenwerte die Beleuchtungseinrichtungen eingeschaltet werden. Durch die Signale des Globalsensors kann ein Einschalten der Beleuchtungseinrichtungen bei allgemeiner Dämmerung sichergestellt werden und durch die Signale des Richtungssensors kann ein Einschalten der Beleuchtungseinrichtungen beispielsweise vor der Einfahrt in einen Tunnel sichergestellt werden. Es wurde festgestellt, daß mit dieser bekannten Einrichtung nicht unter allen Umständen ein zuverlässiges Einschalten der Beleuchtungseinrichtungen erreicht werden kann beispielsweise bedingt durch eine Temperaturabhängigkeit der Signale der Sensoreinrichtung.

### Vorteile der Erfindung

Die erfindungsgemäße Einrichtung zur automatischen Schaltung von Beleuchtungseinrichtungen bei Fahrzeugen mit den Merkmalen gemäß Anspruch 1 hat demgegenüber den Vorteil, daß auch bei unterschiedlichen Temperaturen eine zuverlässige Schaltung der Beleuchtungseinrichtungen erreicht ist.

In den abhängigen Ansprüchen sind vorteilhafte Ausgestaltungen und Weiterbildungen der erfindungsgemäßen Einrichtung angegeben. Die Weiterbildung gemäß Anspruch 2 ermöglicht es, bei abrupten Helligkeitsänderungen, bei denen die Adaption des menschlichen Auges problematisch ist, bereits bei größerer Helligkeit die Beleuchtungseinrichtungen eingeschaltet werden und damit die Sichtverhältnisse verbessert werden. Dies wird durch die Weiterbildung gemäß Anspruch 3 weiter unterstützt. Durch die Weiterbildung gemäß Anspruch 4 ist sichergestellt, daß die Einschaltung der Beleuchtungseinrichtungen nach einer bestimmten Fahrstrecke des Fahrzeugs erfolgt, beispielsweise rechtzeitig vor Einfahrt in einen Tunnel. Die Weiterbildung gemäß Anspruch 6 ermöglicht eine Anpassung der Schaltung der Beleuchtungseinrichtungen an die Witterung, wobei diese bei vorhandenem Niederschlag bereits bei größerer Helligkeit eingeschaltet werden als bei Trockenheit. Mit den Merkmalen gemäß Anspruch 7 wird dieser Gedanke noch weitergeführt, indem die Einschaltung der Beleuchtungseinrichtungen mit zunehmender Niederschlagsintensität bei größerer Helligkeit erfolgt.

### Zeichnung

Ein Ausführungsbeispiel der Erfindung ist in der Zeichnung dargestellt und in der nachfolgenden Beschreibung näher erläutert. Es zeigen Figur 1 ein Fahrzeug mit Beleuchtungseinrichtungen und einer Einrichtung zur automatischen Schaltung der Beleuchtungseinrichtungen, Figur 2 in vereinfachter Darstellung die Einrichtung zur automatischen Schaltung der Beleuchtungseinrichtungen, Figur 3 einen Verlauf von Signalen einer Sensoreinrichtung der Einrichtung zur automatischen Schaltung der Beleuchtungseinrichtungen bei langsamer Signaländerung, Figur 4 den Verlauf der Signale der Sensoreinrichtung bei schneller Signaländerung, Figur 5 eine temperaturabhängige Korrektur der Signale der Sensoreinrichtung, Figur 6 eine Änderungsgeschwindigkeitsabhängige Änderung von Schwellenwerten und Figur 7 eine witterungsabhängige Änderung von Schwellenwerten.

### Beschreibung des Ausführungsbeispiels

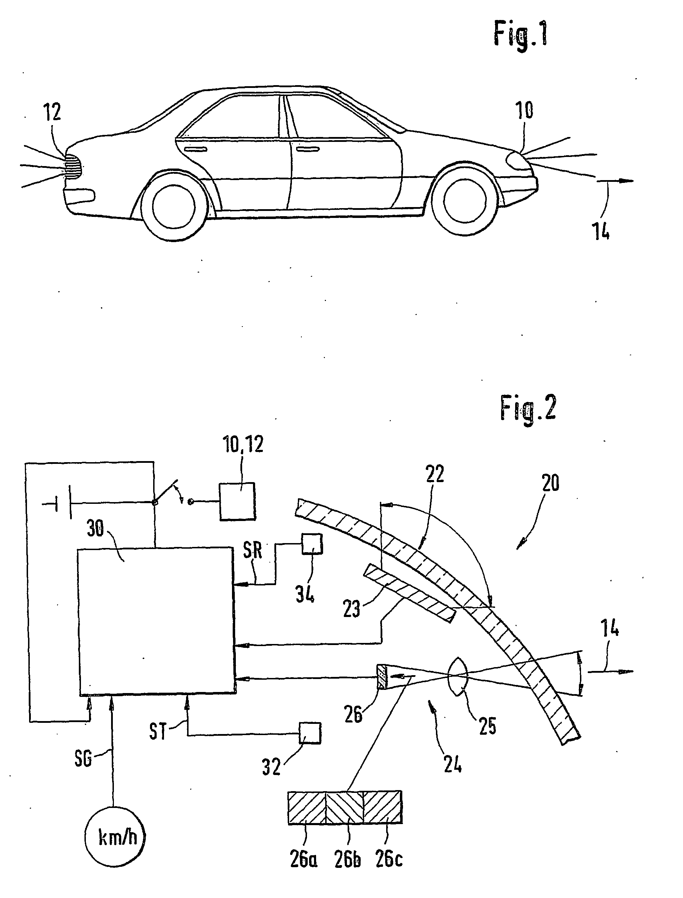

In Figur 1 ist stark vereinfacht ein Fahrzeug, insbesondere ein Kraftfahrzeug, dargestellt, das mit Beleuchtungseinrichtungen versehen ist, die unter anderem an der Vorderseite des Fahrzeugs angeordnete Scheinwerfer 10 und an der Rückseite des Fahrzeugs angeordnete Rückleuchten 12 umfassen. Die Scheinwerfer 10 können dabei reine Abblendlichtscheinwerfer sein oder kombinierte Abblendlicht- und Fernlichtscheinwerfer, die zwischen ihren beiden Betriebsstellungen umschaltbar sind. Zur automatischen Schaltung der Beleuchtungseinrichtungen, das heißt des Abblendlichts der Scheinwerfer 10 und der Rückleuchten 12, ist eine Einrichtung vorgesehen, die am Fahrzeug angeordnet ist.

Diese in Figur 2 vereinfacht dargestellte Einrichtung umfaßt eine Sensoreinrichtung 20 und eine mit dieser verbundene Auswerteeinrichtung 30. Die Sensoreinrichtung 20 ist an der Vorderseite des Fahrzeugs angeordnet und kann beispielsweise in einen der Scheinwerfer 10 integriert sein oder getrennt von den Scheinwerfern angeordnet sein. Die Sensoreinrichtung 20 kann auch im Innenraum des Fahrzeugs hinter der Windschutzscheibe angeordnet sein. Die Sensoreinrichtung 20 weist wenigstens einen Globalsensor 22 auf, durch den die Lichtintensität, das heißt die Helligkeit, in der Umgebung des Fahrzeugs erfaßt wird. Dies bedeutet, daß durch den Globalsensor 22 nicht nur aus einer bestimmten Richtung auf die Sensoreinrichtung 20 treffendes Licht erfaßt wird, sondern aus verschiedenen Richtungen aus der Umgebung des Fahrzeugs und somit die allgemeine Lichtintensität in der Umgebung des Fahrzeugs vom Globalsensor 22 erfaßt wird. Der Globalsensor 22 weist wenigstens ein lichtempfindliches Element 23 auf, das abhängig von der Intensität des auf dieses treffenden Lichts ein elektrisches Signal erzeugt, beispielsweise einen Stromfluß oder eine Spannung, das proportional zur Intensität des auftreffenden Lichts und damit zur Helligkeit in der Umgebung des Fahrzeugs ist. Die Sensoreinrichtung 20 weist außerdem wenigstens einen Richtungssensor 24 auf, durch den nur aus einer bestimmten Richtung auf die Sensoreinrichtung 20 treffendes Licht erfaßt wird. Der Richtungssensor 24 ist dabei derart angeordnet, daß durch diesen im wesentlichen entgegen der Fahrtrichtung 14 des Fahrzeugs auf die Sensoreinrichtung 20 treffendes Licht erfaßt wird. Der Richtungssensor 24 kann eine Abbildungsoptik 25 aufweisen, durch die entgegen der Fahrtrichtung 14 auf die Sensoreinrichtung 20 treffendes Licht auf den Richtungssensor 24 gebündelt wird. Der Richtungssensor 24 weist ebenfalls wenigstens ein lichtempfindliches Element 26 auf, das ein zur Intensität des auftreffenden Lichts proportionales elektrisches Signal erzeugt. Beim Richtungssensor 24 kann das lichtempfindliche Element in mehrere Segmente unterteilt sein oder es können mehrere lichtempfindliche Elemente vorgesehen sein, von denen jeweils eines oder mehrere ein Segment bilden, wobei auf die Segmente aus unterschiedlichen Richtungen kommendes Licht auftrifft. Es kann beispielsweise eine Unterteilung in drei Segmente 26a,b,c vorgesehen werden, wobei auf ein erstes Segment 26a aus dem Bereich des linken Fahrbahnrands vor dem Fahrzeug kommendes Licht trifft, auf ein zweites Segment 26b aus einem mittleren Bereich der Fahrbahn kommendes Licht und auf ein drittes Segment 26c aus dem Bereich des rechten Fahrbahnrands kommendes Licht trifft.

Der Auswerteeinrichtung 30 werden die Signale der Sensoreinrichtung 20, das heißt des Globalsensors 22 und des Richtungssensors 24, zugeführt. Der Auswerteeinrichtung 30 wird außerdem ein Signal über den Schaltzustand der Beleuchtungseinrichtungen 10,12 zugeführt, das heißt darüber, ob diese eingeschaltet oder ausgeschaltet sind. In der Auswerteeinrichtung 30 wird durch Verarbeitung der Signale der Sensoreinrichtung 20 unter Berücksichtigung des Schaltzustands der Beleuchtungseinrichtungen 10,12 ermittelt, ob bei den aktuell vorliegenden Lichtintensitäten in der Umgebung des Fahrzeugs eine Änderung von deren Schaltzustand erforderlich ist, insbesondere, ob diese bei nicht ausreichender Helligkeit eingeschaltet werden müssen.

Durch die Auswerteeinrichtung 30 werden die Signale der Sensoreinrichtung 20, das heißt ein Signal von deren Globalsensor 22 und ein Signal von deren Richtungssensor 24, jeweils mit einem Schwellenwert verglichen, bei dessen Unterschreiten die Beleuchtungseinrichtungen 10,12 eingeschaltet werden. Diese Schwellenwerte können in der Auswerteeinrichtung 30 gespeichert sein oder durch diese in Abhängigkeit eines oder mehrerer nachfolgend noch erläuterter Parameter ermittelt werden. Es sind dabei für die Signale der Sensoreinrichtung 20 jeweils zwei Schwellenwerte SE und SA vorhanden, wobei jeweils die Schwellenwerte SE höher sind als die Schwellenwerte SA. Ein Einschalten der Beleuchtungseinrichtungen 10,12 erfolgt, wenn das Signal des Globalsensors 22 und/oder das Signal des Richtungssensors 24 den zugehörigen Schwellenwert SE unterschreitet. Ein Ausschalten der Beleuchtungseinrichtungen 10,12 erfolgt erst dann, wenn sowohl das Signal des Globalsensors 22 als auch das Signal des Richtungssensors 24 den zugehörigen Schwellenwert SA überschreitet. Durch diese Hysteresefunktion wird erreicht, daß die Beleuchtungseinrichtungen 10,12 bei um die zugehörigen Schwellenwerte SE schwankenden Signalen der Sensoreinrichtung 20 nicht ständig ein- und ausgeschaltet werden.

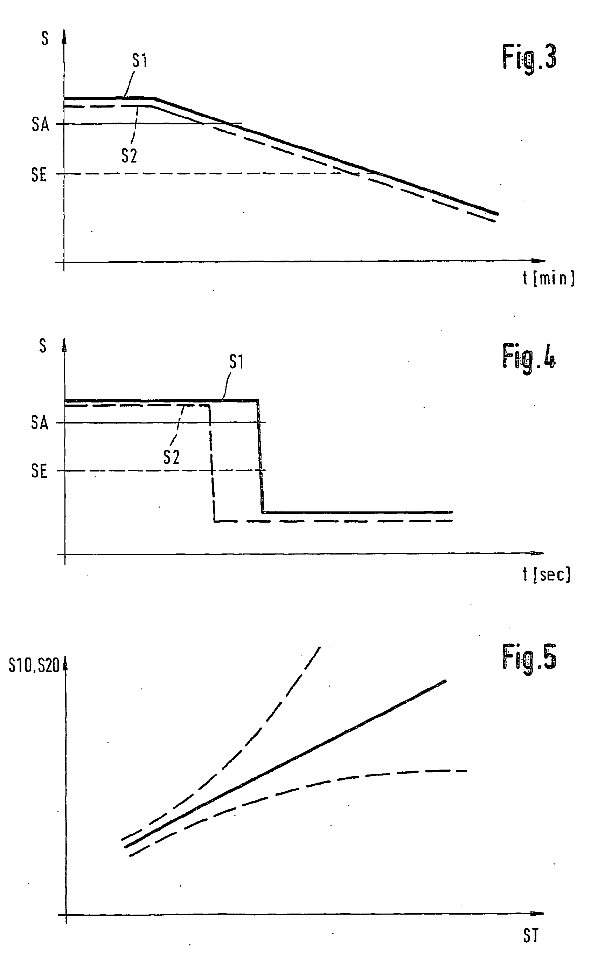

Aus dem Signal des Globalsensors 22 der Sensoreinrichtung 20 kann durch die Auswerteeinrichtung 30 eine allmähliche, langsame Änderung der allgemeinen Lichtintensität in der Umgebung des Fahrzeugs beispielsweise während der Dämmerung erkannt werden, so daß rechtzeitig die Beleuchtungseinrichtungen 10, 12 eingeschaltet werden bzw. bei zunehmender Lichtintensität ausgeschaltet werden. In Figur 3 ist der zeitliche Verlauf der Signale S1 des Globalsensors 22 und der Signale S2 des Richtungssensors 24 der Sensoreinrichtung 20 bei allmählich abnehmender Lichtintensität dargestellt.

Aus dem Signal des Richtungssensors 24 können durch dessen Abnahme durch die Auswerteeinrichtung 30 in Fahrtrichtung 14 vor dem Fahrzeug liegende dunkle Straßenabschnitte erkannt werden. Dunkle Straßenabschnitte können beispielsweise ein in Fahrtrichtung 14 vor dem Fahrzeug angeordneter Tunnel, eine Unterführung oder ein Waldstück sein. Durch die Auswerteeinrichtung können die Beleuchtungseinrichtungen rechtzeitig vor Erreichen des dunklen Straßenabschnitts eingeschaltet werden. In Figur 4 ist der zeitliche Verlauf der Signale S1 des Globalsensors 22 und der Signale S2 des Richtungssensors 24 der Sensoreinrichtung 20 bei Annäherung an einen dunklen Straßenabschnitt dargestellt. Durch das abnehmende Signal S2 des Richtungssensors 24 kann der dunkle Straßenabschnitt bereits frühzeitig erkannt werden, während das Signal S1 des Globalsensors 22 erst bei Einfahrt in den dunklen Straßenabschnitt abnimmt.

Die Signale S1, S2 des Globalsensors 22 und des Richtungssensors 24 der Sensoreinrichtung 20 sind abhängig von der Temperatur der Sensoreinrichtung 20. Um diese Temperaturabhängigkeit der Signale S1, S2 zu kompensieren ist eine Temperaturmesseinrichtung 32 vorgesehen, durch die vorzugsweise die Temperatur der Sensoreinrichtung 20 erfaßt wird. Alternativ kann die Temperaturmesseinrichtung 32 auch entfernt von der Sensoreinrichtung 20 angeordnet sein, wobei diese dann jedoch mit der Auswerteeinrichtung 30 verbunden sein muß. Der Auswerteeinrichtung 30 wird durch die Temperaturmesseinrichtung 32 ein Signal ST für die Temperatur der Sensoreinrichtung 20 zugeführt. In der Auswerteeinrichtung 30 sind temperaturabhängige Grundsignale S1o und S2o für den Globalsensor 22 und den Richtungssensor 24 gespeichert, die diese ohne jeden Lichteinfall erzeugen. Somit ist in der Auswerteeinrichtung 30 für verschiedene Temperaturen jeweils ein Grundsignal S1o und S2o für den Globalsensor 22 und den Richtungssensor 24 gespeichert. Die tatsächlichen Signale S1 und S2 des Globalsensors 22 und des Richtungssensors 24 werden durch die Auswerteeinrichtung 30 durch das jeweilige Grundsignal S1o und S2o temperaturabhängig korrigiert, so daß jeweils ein zuverlässiges und nicht abhängig von der Temperatur verfälschtes Signal S1, S2 vorliegt, das durch die Auswerteeinrichtung 30 mit den Schwellenwerten SE und SA verglichen wird. Alternativ kann auch vorgesehen werden, daß nicht die Signale S1 und S2 der Sensoreinrichtung 20 temperaturabhängig korrigiert werden, sondern daß die Schwellenwerte SE und SA mit dem jeweiligen temperaturabhängigen Grundsignal S10 und S20 korrigiert werden. In Figur 5 ist die Abhängigkeit der Grundsignale S10, S20 von der Temperatur dargestellt. Es kann dabei wie mit durchgezogener Linie in Figur 5 dargestellte eine lineare oder mit gestrichelten Linien dargestellte beliebige andere Abhängigkeit der Grundsignale S1o, S20 von der Temperatur bestehen.

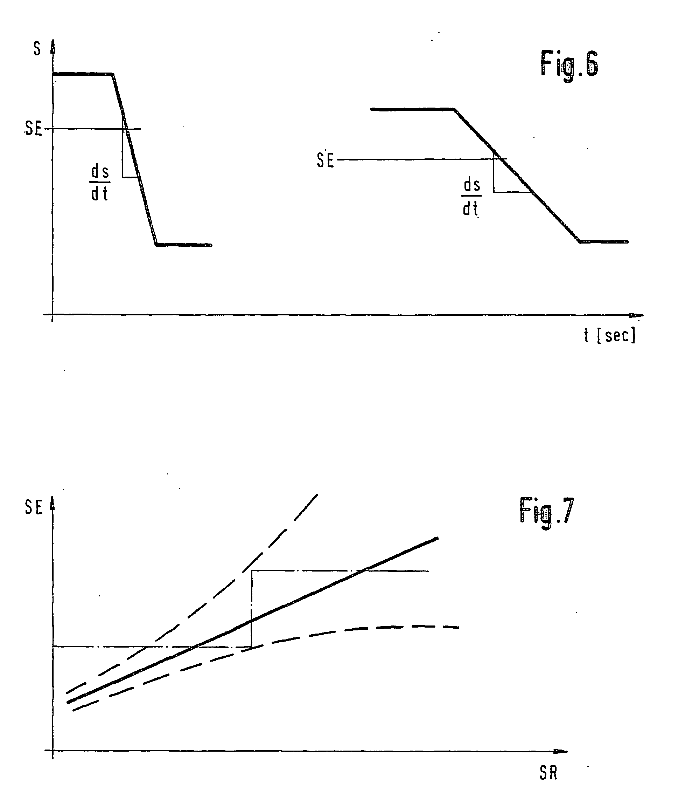

Bei einer Weiterbildung der Einrichtung ist vorgesehen, daß durch die Auswerteeinrichtung 30 nicht nur die Absolutwerte der Signale S1 und S2 der Sensoreinrichtung 20 verarbeitet werden, sondern auch die zeitliche Änderung dS/dt der Signale S1 und S2, das heißt deren Änderungsgeschwindigkeit. Die Verarbeitung der Signale S1 und S2 der Sensoreinrichtung 20 durch die Auswerteeinrichtung 30 erfolgt vorzugsweise getaktet, wobei aus zeitlich aufeinander folgenden Verarbeitungen die zeitliche Änderung und somit die Änderungsgeschwindigkeit der Signale S1 und S2 ermittelt wird. Die Schwellenwerte SE und/oder SA werden abhängig von der Änderungsgeschwindigkeit der Signale S1 und S2 verändert, derart, daß bei hoher Änderungsgeschwindigkeit die Schwellenwerte SE und/oder SA erhöht werden. Dies bedeutet, daß bei hoher Änderungsgeschwindigkeit der Signale S1 und S2 eine Einschaltung der Beleuchtungseinrichtungen 10,12 bereits bei noch relativ hoher Lichtintensität erfolgt und bei geringer Änderungsgeschwindigkeit eine Einschaltung der Beleuchtungseinrichtungen 10,12 erst bei geringerer Lichtintensität erfolgt. Hierdurch wird eine Anpassung an die Adaptionsfähigkeit des menschlichen Auges an unterschiedliche Lichtintensitäten erreicht, da bei schneller Abnahme der Lichtintensität das Auge schlechter adaptiert als bei langsamer Abnahme der Lichtintensität. In Figur 6 ist im linken Teil eine Änderung der Signale S1, S2 mit geringer Änderungsgeschwindigkeit dS/dt dargestellt, bei der keine oder nur eine geringe Erhöhung der Schwellenwerte SE und/oder SA erfolgt. Im rechten Teil der Figur 6 ist eine Änderung der Signale S1,S2 mit hoher Änderungsgeschwindigkeit dS/dt dargestellt, bei der eine Erhöhung oder eine stärkere Erhöhung der Schwellenwerte SE und/oder SA erfolgt.

Es kann außerdem vorgesehen werden, daß durch die Auswerteeinrichtung 30 können die Schwellenwerte SE und/oder SA abhängig vom Absolutwert der Signale S1 und/oder S2 verändert werden. Dabei werden die Schwellenwerte SE und/oder SA derart verändert, daß bei ausgehend von einem hohen Signal abnehmendem Signal S1, S2 die Schwellenwerte SE und/oder SA höher sind als bei ausgehend von einem geringen Signal abnehmendem Signal S1, S2. Dies bedeutet, daß bei ausgehend von einem hohen Signal abnehmendem Signal S1, S2 eine Einschaltung der Beleuchtungseinrichtungen 10,12 bereits bei noch relativ hoher Lichtintensität erfolgt und bei ausgehend von einem geringen Signal abnehmendem Signal S1, S2 eine Einschaltung der Beleuchtungseinrichtungen 10,12 erst bei geringerer Lichtintensität erfolgt. Auch hierdurch wird eine Anpassung an die Adaptionsfähigkeit des menschlichen Auges an unterschiedliche Lichtintensitäten erreicht, da das Auge ausgehend von einer hohen Lichtintensität schlechter an eine geringere Lichtintensität adaptiert als ausgehend von einer geringeren Lichtintensität. In Figur 6 erfolgt im linken Teil einer Abnahme des Signals S1,S2 ausgehend von einem hohen Wert, so daß dort eine Erhöhung der Schwellenwerte SE und/oder SA erfolgt. Im rechten Teil der Figur 6 erfolgt die Abnahme des Signals S1, S2 ausgehend von einem niedrigeren Wert, so daß hier keine Erhöhung oder nur eine geringere Erhöhung der Schwellenwerte SE und/oder SA erfolgt.

Wie bereits vorstehend angegeben erfolgt die Verarbeitung der Signale S1, S2 der Sensoreinrichtung 20 durch die Auswerteeinrichtung 30 vorzugsweise getaktet. Gemäß einer Weiterbildung der Einrichtung ist vorgesehen, daß der Auswerteeinrichtung 30 zusätzlich ein Signal SG für die aktuelle Geschwindigkeit des Fahrzeugs zugeführt wird. Dieses Geschwindigkeitssignal SG kann beispielsweise vom Tachometer des Fahrzeugs abgeleitet werden. Die Taktfrequenz, mit der die Verarbeitung der Signale S1, S2 der Sensoreinrichtung 20 durch die Auswerteeinrichtung 30 erfolgt wird abhängig von der aktuellen Geschwindigkeit des Fahrzeugs derart verändert, daß bei hoher Geschwindigkeit die Verarbeitung mit einer höheren Taktfrequenz erfolgt als bei geringer Geschwindigkeit. Es kann dabei vorgesehen sein, daß mit zunehmender Geschwindigkeit die Taktfrequenz der Verarbeitung erhöht wird. Die Erhöhung der Taktfrequenz kann insbesondere proportional mit der Zunahme der Geschwindigkeit erfolgen derart, daß die Fahrstrecke, die das Fahrzeug während einer Taktdauer zurücklegt, zumindest annähernd konstant ist. Hierdurch wird erreicht, daß eine Einschaltung der Beleuchtungseinrichtungen 10,12 unabhängig von der Geschwindigkeit nach einer bestimmten Fahrstrecke erfolgt und somit sicher rechtzeitig beispielsweise vor Einfahrt in einen dunklen Straßenabschnitt.

Bei einer Weiterbildung der Einrichtung ist vorgesehen, daß die Schwellenwerte SE und/oder SA abhängig von Witterungsbedingungen verändert werden, wobei zwischen trockener Witterung und Niederschlag unterschieden wird. Zur Erfaßung der Witterungsbedingungen kann vorzugsweise ein Regensensor 34 genutzt werden, durch den auf die Windschutzscheibe des Fahrzeugs treffenden Niederschlag erfaßt und abhängig hiervon den Betrieb der Scheibenwischer des Fahrzeugs steuert. Der Auswerteeinrichtung 30 kann direkt ein Signal SR des Regensensors 34 zugeführt werden oder ein vom Betrieb der Scheibenwischer abgeleitetes Signal SR. Es kann vorgesehen sein, daß das Signal SR, das durch die Auswerteeinrichtung 30 verarbeitet wird, nur zwei verschiedene Werte für trockene Witterung und Niederschlag annimmt. In diesem Fall werden durch die Auswerteeinrichtung 30 die Schwellenwerte SE und/oder SA bei Niederschlag höher gesetzt als bei trockener Witterung. Dies bedeutet, daß bei Niederschlag die -Beleuchtungseinrichtungen 10,12 bereits bei größerer Lichtintensität eingeschaltet werden als bei trockener Witterung. Es kann darüberhinaus auch vorgesehen sein, daß das Signal SR, das durch die Auswerteeinrichtung 30 verarbeitet wird, einen von der Intensität des Niederschlags abhängigen Wert annimmt. Das Signal SR kann dabei auch von der Geschwindigkeit der Scheibenwischer abhängen, beispielsweise unterschiedliche Werte annehmen wenn sich die Scheibenwischer in Intervallbetrieb, in einer Betriebsstellung mit einer ersten oder zweiten oder höheren Geschwindigkeit befinden. Durch die Auswerteeinrichtung 30 werden dabei die Schwellenwerte SE und/oder SA abhängig vom Signal SR mit zunehmender Intensität des Niederschlags bzw. mit zunehmender Geschwindigkeit der Scheibenwischer erhöht, so daß mit zunehmender Intensität des Niederschlags die Beleuchtungseinrichtungen 10,12 bereits bei höherer Lichtintensität eingeschaltet werden. In Figur 7 ist die Abhängigkeit der Schwellenwerte SE und/oder SA vom Signal SR dargestellt, die wie mit durchgezogener Linie angedeutet linear sein kann oder wie mit gestrichelten Linien angedeutet auch beliebig anders sein kann. Es kann auch wie mit strichpunktierter Linie angedeutet auch nur eine Umschaltung zwischen zwei oder mehr definierten Schwellenwerten erfolgen.

## Patentansprüche

1. Einrichtung zur automatischen Schaltung von Beleuchtungseinrichtungen bei Fahrzeugen mit einer Sensoreinrichtung (20), durch die die Lichtintensität in der Umgebung des Fahrzeugs erfaßt wird, wobei die Sensoreinrichtung (20) wenigstens einen Globalsensor (22) aufweist, durch den ungerichtet die allgemeine Lichtintensität in der Umgebung des Fahrzeugs erfaßt wird, und wenigstens einen Richtungssensor (24) aufweist, durch den gerichtet die Lichtintensität zumindest annähernd in Fahrtrichtung (14) des Fahrzeugs erfaßt wird, und mit einer Auswerteeinrichtung (30), durch die die Signale (S1,S2) der Sensoren (22,24) der Sensoreinrichtung (20) mit Schwellenwerten (SE) verglichen werden und bei Unterschreiten wenigstens eines der Schwellenwerte (SE) die Beleuchtungseinrichtungen (10,12) eingeschaltet werden, **dadurch gekennzeichnet, daß** die Einrichtung eine Temperaturmesseinrichtung (32) aufweist, dursch die zumindest mittelbar die aktuelle Temperatur der Sensoreinrichtung (20) erfaßt wird und ein Signal (ST) hierzu der Auswerteeinrichtung (30) zugeführt wird, und daß in der Auswerteeinrichtung (30) temperaturabhängige Grundsignale (S1o,S2o) der Sensoren (22,24) der Sensoreinrichtung (20) ohne Lichteinfall gespeichert sind und daß durch die Auswerteeinrichtung (30) eine Korrektur der aktuellen Signale (S1,S2) der Sensoren (22, 24) der Sensoreinrichtung (20) und/oder der Schwellenwerte (SE) entsprechend der Grundsignale (S10, S20) erfolgt.

2. Einrichtung nach Anspruch 1, **dadurch gekennzeichnet, daß** durch die Auswerteeinrichtung (30) die Änderungsgeschwindigkeit (dS/dt) der Signale (S1,S2) der Sensoreinrichtung (20) ermittelt wird und daß die Schwellenwerte (SE) abhängig von der Änderungsgeschwindigkeit (dS/dt) der Signale (S1, S2) verändert werden, derart, daß bei hoher Änderungsgeschwindigkeit (dS/dt) die Schwellenwerte (SE) höher sind als bei geringer Änderungsgeschwindigkeit (dS/dt) .

3. Einrichtung nach Anspruch 1 oder 2, **dadurch gekennzeichnet, daß** durch die Auswerteeinrichtung (30) die Schwellenwerte (SE) abhängig von den Absolutwerten der Signale (S1,S2) der Sensoreinrichtung (20) verändert werden, derart, daß bei ausgehend von einem hohen Absolutwert abnehmendem Signal (S1, S2) die Schwellenwerte (SE) höher sind als bei ausgehend von einem niedrigen Absolutwert abnehmendem Signal (S1, S2).

4. Einrichtung nach einem der Ansprüche 1 bis 3, **dadurch gekennzeichnet, daß** der Auswerteeinrichtung (30) ein Signal (SG) für die aktuelle Geschwindigkeit des Fahrzeugs zugeführt wird, und daß die Verarbeitung der Signale (S1, S2) der Sensoren (22,24) der Sensoreinrichtung (20) durch die Auswerteeinrichtung (30) abhängig von der Geschwindigkeit des Fahrzeugs getaktet erfolgt, derart, daß die Verarbeitung bei hoher Geschwindigkeit mit einer höheren Taktfrequenz erfolgt als bei geringer Geschwindigkeit.

5. Einrichtung nach Anspruch 4, **dadurch gekennzeichnet, daß** die Taktfrequenz derart abhängig von der Geschwindigkeit verändert wird, daß die Fahrstrecke, die das Fahrzeug zwischen aufeinanderfolgenden Verarbeitungstakten zurücklegt, zumindest annähernd konstant ist.

6. Einrichtung nach einem der vorstehenden Ansprüche, **dadurch gekennzeichnet, daß** eine weitere Sensoreinrichtung (34) zur Erfaßung von Niederschlag vorgesehen ist, durch die zumindest mittelbar ein Signal (SR) erzeugt wird, das der Auswerteeinrichtung (30) zugeführt wird, und daß durch die Auswerteeinrichtung (30) eine Änderung der Schwellenwerte (SE) derart erfolgt, daß die Schwellenwerte (SE) bei Niederschlag höher sind als ohne Niederschlag.

7. Einrichtung nach Anspruch 6, **dadurch gekennzeichnet, daß** das durch die weitere Sensoreinrichtung (34) zumindest mittelbar erzeugte Signal (SR) von der Intensität des Niederschlags abhängig ist und daß durch die Auswerteeinrichtung (30) eine Änderung der Schwellenwerte (SE) derart erfolgt, daß die Schwellenwerte (SE) bei hoher Intensität des Niederschlags höher sind als bei geringer Intensität des Niederschlags.

## Claims

1. Device for automatically switching lighting devices in vehicles, comprising a sensor device (20) by means of which the light intensity in the surroundings of the vehicle is detected, the sensor device (20) having at least one global sensor (22) by means of which the general light intensity in the surroundings of the vehicle is detected in an undirected fashion, and having at least one directional sensor (24) by means of which the light intensity at least approximately in the driving direction (14) of the vehicle is detected in a directed fashion, and comprising an evaluation device (30) by means of which the signals (S1, S2) of the sensors (22, 24) of the sensor device (20) are compared with threshold values (SE) and, in the event of undershooting of at least one of the threshold values (SE), the lighting devices (10, 12) are switched on, **characterized in that** the device has a temperature measuring device (32) by means of which the current temperature of the sensor device (20) is detected at least indirectly and a signal (ST) to this effect is fed to the evaluation device (30), and **in that** temperature-dependent basic signals (Slo, S2o) of the sensors (22, 24) of the sensor device (20) are stored in the evaluation device (30) in the absence of light incidence, and **in that** the evaluation device (30) performs a correction of the current signals (S1, S2) of the sensors (22, 24) of the sensor device (20) and/or of the threshold values (SE) in accordance with the basic signals (Slo, S2o).

2. Device according to Claim 1, **characterized in that** the evaluation device (30) determines the rate of change (dS/dt) of the signals (S1, S2) of the sensor device (20), and **in that** the threshold values (SE) are varied as a function of the rate of change (dS/dt) of the signals (S1, S2) in such a way that the threshold values (SE) are higher in the event of a high rate of change (dS/dt) than in the event of a low rate of change (dS/dt).

3. Device according to Claim 1 or 2, **characterized in that** the evaluation device (30) varies the threshold values (SE) as a function of the absolute values of the signals (S1, S2) of the sensor device (20) in such a way that the threshold values (SE) are higher in the event of a signal (S1, S2) decreasing starting from a high absolute value than in the event of a signal (S1, S2) decreasing starting from a low absolute value.

4. Device according to one of Claims 1 to 3, **characterized in that** the evaluation device (30) is fed a signal (SG) for the current speed of the vehicle, and **in that** the processing of the signals (S1, S2) of the sensors (22, 24) of the sensor device (20) is performed in a clocked fashion by the evaluation device (30) as a function of the speed of the vehicle in such a way that the processing is performed with a higher clock frequency in the event of high speed than in the event of low speed.

5. Device according to Claim 4, **characterized in that** the clock frequency is varied as a function of the speed in such a way that the driving distance which the vehicle covers between successive processing cycles is at least approximately constant.

6. Device according to one of the preceding claims, **characterized in that** provided for detecting precipitation is a further sensor device (34), which generates at least indirectly a signal (SR) which is fed to the evaluation device (30), and **in that** the evaluation device (30) performs a change in the threshold values (SE) in such a way that the threshold values (SE) are higher in the event of precipitation than without precipitation.

7. Device according to Claim 6, **characterized in that** the signal (SR) generated at least indirectly by the further sensor device (34) is a function of the intensity of the precipitation, and **in that** the evaluation device (30) performs a change to the threshold values (SE) in such a way that the threshold values (SE) are higher in the event of a high intensity of precipitation than in the event of a low intensity of precipitation.

## Revendications

1. Installation de commutation automatique d'installations d'éclairage de véhicules comportant une installation de capteurs (20) pour saisir l'intensité lumineuse dans l'environnement du véhicule,
l'installation de capteurs (20) comportant au moins un capteur global (22) pour saisir l'intensité lumineuse générale non directionnelle dans l'environnement du véhicule et au moins un capteur directionnel (24) pour saisir l'intensité lumineuse dirigée au moins sensiblement dans la direction de déplacement (14) du véhicule et une installation d'exploitation (30) pour comparer les signaux (S1, S2) des capteurs (22, 24) de l'installation de capteurs (20) à des seuils (SE) et en cas de dépassement vers le bas d'au moins l'un des seuils (SE), les installations d'éclairage (10, 12) sont mises en marche,
**caractérisée en ce que**
l'installation comporte une installation de mesure de température (32) pour capter au moins indirectement la température actuelle de l'installation de capteurs (20) et un signal (ST) est appliqué à cet effet à l'installation d'exploitation (30),
l'installation d'exploitation (30) enregistre les signaux de base (S10, S20) dépendant de la température des capteurs (22, 24) de l'installation de capteurs (20) en l'absence de lumière incidente, et
l'installation d'exploitation (30) corrige les signaux actuels (S1, S2) des capteurs (22, 24) de l'installation de capteurs (20) et/ou les seuils (SE) en fonction des signaux de base (S1o, S2o).

2. Installation selon la revendication 1,
**caractérisée en ce que**
l'installation d'exploitation (30) détermine la vitesse de variation (ds/dt) des signaux (S1, S2) de l'installation de capteurs (20),
modifie les seuils (SE) en fonction de la vitesse de variation (ds/dt) des signaux (S1, S2),
et pour une vitesse de variation élevée (ds/dt), les seuils (SE) sont plus élevés que pour une vitesse de variation (ds/dt) faible.

3. Installation selon la revendication 1 ou 2,
**caractérisée en ce que**
l'installation d'exploitation (30) modifie les seuils (SE) en fonction des valeurs absolues des signaux (S1, S2) de l'installation de capteurs (20) de façon que partant d'un signal (S1, S2) de valeur absolue élevée, les seuils (SE) sont plus élevés que pour un signal (S1, S2) à valeur absolue faible.

4. Installation selon l'une des revendications 1 à 3,
**caractérisée en ce que**
l'installation d'exploitation (30) reçoit un signal (SG) correspondant à la vitesse actuelle du véhicule et elle traite les signaux (S1, S2) des capteurs (22, 24) de l'installation de capteurs (20) en fonction de la vitesse du véhicule, de manière cadencée, pour que le traitement à vitesse élevée se fasse à une fréquence de travail plus élevée qu'à vitesse faible.

5. Installation selon la revendication 4,
**caractérisée en ce qu'**
la fréquence de la cadence est modifiée en fonction de la vitesse pour que le trajet parcouru par le véhicule entre les cadences de travail successives soit au moins sensiblement constant.

6. Installation selon l'une des revendications précédentes,
**caractérisée par**
une autre installation de capteurs (34) pour détecter une précipitation, qui génère au moins indirectement un signal (SR) fourni à l'installation d'exploitation (30) qui
modifie les seuils (SE) pour que les seuils (SE) soient plus élevés en cas de précipitation qu'en cas d'absence de précipitation.

7. Installation selon la revendication 6,
**caractérisée en ce que**
le signal (SR) généré au moins indirectement par l'autre installation de capteurs (34) dépend de l'intensité de la précipitation, et
l'installation d'exploitation (30) modifie les seuils (SE) pour qu'ils soient plus élevés pour une précipitation de forte intensité que pour une précipitation de faible intensité.
